(19) Europäisches Patentamt
European Patent Office
Office européen des brevets

(11) **EP 4 722 649 A1**

(12) **EUROPEAN PATENT APPLICATION**
published in accordance with Art. 153(4) EPC

(43) Date of publication:
08.04.2026  Bulletin 2026/15

(21) Application number: 24818553.0

(22) Date of filing: **30.05.2024**

(51) International Patent Classification (IPC):
**G01C 21/00** (2006.01)

(52) Cooperative Patent Classification (CPC):
**G01C 21/00**

(86) International application number:
**PCT/CN2024/096280**

(87) International publication number:
**WO 2024/251021 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 05.06.2023  CN 202310659014
18.08.2023  CN 202311055770

(71) Applicant: **Huawei Technologies Co., Ltd.**
**Shenzhen, Guangdong 518129 (CN)**

(72) Inventors:
• LUO, Wentao
Shenzhen, Guangdong 518129 (CN)
• WANG, Yaoyuan
Shenzhen, Guangdong 518129 (CN)
• ZHANG, Ziyang
Shenzhen, Guangdong 518129 (CN)
• YOU, Wei
Shenzhen, Guangdong 518129 (CN)
• WANG, Yuchen
Shenzhen, Guangdong 518129 (CN)

(74) Representative: **Gill Jennings & Every LLP**
**The Broadgate Tower**
**20 Primrose Street**
**London EC2A 2ES (GB)**

(54) **MAP GENERATION METHOD AND RELATED DEVICE**

(57) This application discloses a map generation method, which may be applied to a robot map building scenario in scenes such as a home, a hotel, a restaurant, a shopping mall, an airport, a hospital, a scenic spot, and a factory. The method includes: first obtaining a plurality of obstacles in a scanning range of a sensor; controlling a terminal device to navigate to a first obstacle, where the first obstacle is an obstacle closest to the terminal device in the plurality of obstacles; then determining a next navigation point of the terminal device, where the next navigation point is an obstacle whose distance from the first obstacle is the shortest in a plurality of candidate obstacles, or the next navigation point is an obstacle that is not selected in the plurality of obstacles and that the terminal device does not pass through; and generating a map based on a navigation trajectory of the terminal device. In a map generation process, the candidate obstacles may be updated in real time, to perform comprehensive exploration, so as to complete map building without a static map.

FIG. 2

## Description

This application claims priorities to Chinese Patent Application No. 202310659014.3, filed with the China National Intellectual Property Administration on June 5, 2023 and entitled "MAP GENERATION METHOD AND RELATED DEVICE", and to Chinese Patent Application No. 202311055770.1, filed with the China National Intellectual Property Administration on August 18, 2023 and entitled "MAP GENERATION METHOD AND RELATED DEVICE", both of which are incorporated herein by reference in their entireties.

## TECHNICAL FIELD

This application relates to the field of artificial intelligence, and in particular, to a map generation method and a related device.

## BACKGROUND

A robot autonomous map building technology is a technology in which a robot efficiently explores a completely unknown new environment without manual intervention. In engineering, a robot map building technology is implemented by manually setting map building points in advance and then making a robot walk along the map building points, resulting in high labor costs. In academia, a static global map needs to be input to complete path planning for map building in an existing map building method. However, obstacles in the real world change frequently, and the map building method is not practical.

Currently, a rapidly exploring random tree algorithm is an algorithm for autonomous map building according to a random optimization principle. First, a user needs to specify a boundary range. Then, the algorithm randomly samples a point, determines whether the point is an obstacle-free point, then finds a node closest to the point in a random tree, and generates a new point by extending a connection line between the two points with a specific step size, to form a new expansion of the random tree. The search tree is randomly expanded until a boundary point within a radar range of a vehicle is reached. A shortest path between the vehicle and the boundary point is found in the search tree, and the vehicle is driven to move to the boundary point. Upon arrival at the boundary point, a new boundary point continues to be explored according to the same method until there is no explorable region within the boundary range.

However, in the foregoing autonomous map building method, map building planning needs to be completed based on a known static map, and an obstacle change in a planning process directly affects map building performance and even causes a risk.

## SUMMARY

This application provides a map generation method, to complete map building planning without a static map.

A first aspect of embodiments of this application provides a map generation method, which may be applied to a robot map building scenario in scenes such as a home, a hotel, a restaurant, a shopping mall, an airport, a hospital, a scenic spot, and a factory. The method may be performed by a map generation device, or may be performed by a component (for example, a processor, a chip, or a chip system) of the map generation device. The map generation device may be a terminal device, or a control device configured to control the terminal device. In the method, a plurality of obstacles in a scanning range (which may also be referred to as a first range) of a sensor in a terminal device are first obtained; the terminal device is controlled to navigate to a first obstacle, where the first obstacle may be randomly selected, or may be an obstacle that is closest to the terminal device or whose distance from the terminal device is less than or equal to a first preset threshold in the plurality of obstacles; then, a next navigation point of the terminal device is determined, where the next navigation point is an obstacle whose distance from the first obstacle is the shortest or is less than or equal to a second preset threshold in a plurality of candidate obstacles, or the next navigation point is an obstacle that is not selected in the plurality of obstacles and that the terminal device does not pass through (or understood as a second range, where the second range is smaller than the first range), and the candidate obstacles include an obstacle newly scanned (that is, in the scanning range of the sensor) for the terminal device in a process of navigation to the first obstacle and/or any obstacle other than the first obstacle in the plurality of obstacles; and a map is generated based on a navigation trajectory of the terminal device, where the navigation trajectory includes the first obstacle and the next navigation point.

In this embodiment of this application, the terminal device is controlled to navigate to the first obstacle in the scanning range of the sensor, the next navigation point is determined, and then the map is generated based on the navigation trajectory of the terminal device. The next navigation point may be an obstacle that is in the plurality of candidate obstacles and that is closest to the first obstacle, or the next navigation point may be an obstacle that is not selected in the plurality of obstacles and that the terminal device does not pass through. Then, the map is generated based on the navigation trajectory of the terminal device. That is, in a map generation process, the next navigation point is determined by using the candidate obstacles. The candidate obstacles may be updated in real time, to perform comprehensive exploration, so as to complete map building without a static map. In addition, determining the candidate obstacles by using two ranges corresponding to scanning can reduce subsequent repeated exploration for a scanned obstacle, thereby implementing efficient map building.

Optionally, in a possible implementation of the first aspect, the terminal device includes a first navigation mode and a second navigation mode, and the first navigation mode and the second navigation mode are used to determine the next navigation point of the terminal device.

In this possible implementation, the terminal device can determine different next navigation points based on different modes by using a plurality of navigation modes of the terminal device, thereby reducing a risk that a navigation point of the terminal device is trapped in local cyclic exploration due to a single navigation mode.

Optionally, in a possible implementation of the first aspect, the foregoing step of determining the next navigation point of the terminal device includes: determining, based on the first navigation mode, that the next navigation point is the obstacle whose distance from the first obstacle is the shortest or is less than or equal to the second preset threshold in the plurality of candidate obstacles.

In this possible implementation, the next navigation point is determined based on a distance in the first navigation mode, so that the terminal device can greedily explore in an unknown environment, and can quickly sense the environment. In addition, a moving distance of the terminal device can be shortened, and energy consumption can be reduced.

Optionally, in a possible implementation of the first aspect, the foregoing step of determining the next navigation point of the terminal device includes: determining, based on the second navigation mode, that the next navigation point is the obstacle that is not selected in the plurality of obstacles and that the terminal device does not pass through.

In this possible implementation, the next navigation point in the second navigation mode is the obstacle that is not selected in the plurality of obstacles and that the terminal device does not pass through, that is, a scanned obstacle is not repeatedly scanned, so that a moving distance of the terminal device can be shortened, and energy consumption can be reduced.

Optionally, in a possible implementation of the first aspect, the navigation trajectory further includes at least one of the following: a location of an obstacle scanned during movement of the terminal device, and a distance between a plurality of obstacles scanned during movement of the terminal device. Steps further include: determining a plurality of first distances, where each of the plurality of first distances indicates a sum of distances between each unexplored obstacle in the plurality of obstacles and both the terminal device and each of a plurality of new obstacles; and determining, as the next navigation point, an unexplored obstacle in the plurality of obstacles and/or a new obstacle corresponding to a distance less than or equal to the second preset threshold in the plurality of first distances.

In this possible implementation, a map may be generated by using an obstacle location and/or a relative location between obstacles.

Optionally, in a possible implementation of the first aspect, the next navigation point is determined in any one of the following manners: a smallest triangle perimeter, a smallest triangle area, a shortest distance, and the like. Three angles in the smallest triangle perimeter and the smallest triangle area are respectively a location of the terminal device, a location of an unexplored obstacle in the plurality of obstacles, and a location of a newly scanned obstacle in the candidate obstacles.

In this possible implementation, the next navigation point may be determined in a manner such as the smallest triangle perimeter, the smallest triangle area, or the shortest distance, to avoid that only the shortest path is used for greedy exploration without considering distribution information of global obstacles, so that a map building algorithm efficiently escapes from a local minimum value. In addition, a moving distance of the terminal device can be shortened, and energy consumption can be reduced.

Optionally, in a possible implementation of the first aspect, before the foregoing step of determining the next navigation point of the terminal device, the method further includes: determining a navigation mode of the terminal device based on a scanned obstacle and the candidate obstacles.

In this possible implementation, the navigation mode is determined by using the scanned obstacle and the candidate obstacles, so that repeated scanning for the scanned obstacle can be properly reduced, and map building efficiency can be improved.

Optionally, in a possible implementation of the first aspect, the foregoing step of determining the navigation mode of the terminal device based on the scanned obstacle and the candidate obstacles includes: inputting the scanned obstacle and the candidate obstacles into a trained neural network to obtain a result, where the result includes the first navigation mode or the second navigation mode, and the trained neural network is obtained through training based on a preset navigation path.

In this possible implementation, the two modes are determined by using the neural network obtained through training based on the preset navigation path, so that a better navigation path can be found as much as possible, thereby improving map building efficiency.

Optionally, in a possible implementation of the first aspect, before the foregoing step of generating the map based on the navigation trajectory of the terminal device, the method further includes: controlling the terminal device to navigate to the next navigation point; updating the candidate obstacles; updating a third range based on a preset condition, where the third range includes the first range and/or a second range, the second range is smaller than the first range, and the preset condition is related to updated scanned obstacles, or the preset condition is related to the first range and updated candidate obstacles; and controlling navigation of the terminal device based on an updated third range.

In this possible implementation, to reduce energy consumption of autonomous map building in a large scene, a scanning range (that is, the first range) of a radar is adaptively adjusted based on location distribution of points that have been captured by the terminal device, to avoid power consumption caused by full-range scanning of the radar. In addition, a larger updated second range indicates lower search and walking costs of the terminal device. The second range may be adaptively adjusted by setting the preset condition, thereby reducing map building costs of the terminal device.

A second aspect of embodiments of this application provides a map generation device, which may be used in a robot map building scenario in scenes such as a home, a hotel, a restaurant, a shopping mall, an airport, a hospital, a scenic spot, and a factory. The map generation device may be a terminal device, or a control device configured to control the terminal device. The map generation device includes: an obtaining unit, configured to obtain a plurality of obstacles in a first range, where the first range is a scanning range of a sensor in a terminal device; a control unit, configured to control the terminal device to navigate to a first obstacle, where the first obstacle is an obstacle that is closest to the terminal device or whose distance from the terminal device is less than or equal to a first preset threshold in the plurality of obstacles; a determining unit, configured to determine a next navigation point of the terminal device, where the next navigation point is an obstacle whose distance from the first obstacle is the shortest or is less than or equal to a second preset threshold in a plurality of candidate obstacles, or the next navigation point is an obstacle that is not selected in the plurality of obstacles and that the terminal device does not pass through, and the candidate obstacles include an obstacle newly scanned by the terminal device in a process of navigation to the first obstacle and/or any obstacle other than the first obstacle in the plurality of obstacles; and a generation unit, configured to generate a map based on a navigation trajectory of the terminal device, where the navigation trajectory includes the first obstacle and the next navigation point.

Optionally, in a possible implementation of the second aspect, the terminal device includes a first navigation mode and a second navigation mode, and the first navigation mode and the second navigation mode are used by the determining unit to determine the next navigation point of the terminal device.

Optionally, in a possible implementation of the second aspect, the determining unit is specifically configured to determine, based on the first navigation mode, that the next navigation point is the obstacle whose distance from the first obstacle is the shortest or is less than or equal to the second preset threshold in the plurality of candidate obstacles.

Optionally, in a possible implementation of the second aspect, the determining unit is specifically configured to determine, based on the second navigation mode, that the next navigation point is the obstacle that is not selected in the plurality of obstacles and that the terminal device does not pass through.

Optionally, in a possible implementation of the second aspect, the navigation trajectory further includes at least one of the following: a location of an obstacle scanned during movement of the terminal device, and a distance between a plurality of obstacles scanned during movement of the terminal device.

Optionally, in a possible implementation of the second aspect, the next navigation point is determined in any one of the following manners: a smallest triangle perimeter, a smallest triangle area, and a shortest distance.

Optionally, in a possible implementation of the second aspect, the determining unit is further configured to determine a navigation mode of the terminal device based on a scanned obstacle and the candidate obstacles.

Optionally, in a possible implementation of the second aspect, the determining unit is specifically configured to input the scanned obstacle and the candidate obstacles into a trained neural network to obtain a result, where the result includes the first navigation mode or the second navigation mode, and the trained neural network is obtained through training based on a preset navigation path.

Optionally, in a possible implementation of the second aspect, the control unit is further configured to control the terminal device to navigate to the next navigation point; the map generation device further includes: an update unit, configured to update the candidate obstacles; the update unit is further configured to update a third range based on a preset condition, where the third range includes the first range and/or a second range, the second range is smaller than the first range, and the preset condition is related to updated scanned obstacles, or the preset condition is related to the first range and updated candidate obstacles; and the control unit is further configured to control navigation of the terminal device based on an updated third range.

A third aspect of embodiments of this application provides a map generation device, including a processor. The processor is coupled to a memory, the memory is configured to store a program or instructions, and when the program or the instructions are executed by the processor, the map generation device is enabled to implement the method according to the first aspect or any possible implementation of the first aspect.

A fourth aspect of embodiments of this application provides a map generation method. The method is applied to a control device. The method includes: receiving a first request; in response to the first request, controlling a terminal device to navigate to a first obstacle and a next navigation point, and controlling the terminal device to generate a map based on a navigation trajectory of the terminal device, where the first obstacle and the next navigation point are determined according to the method in the first aspect or any possible implementation of the first aspect; and receiving the map from the terminal device.

A fifth aspect of embodiments of this application provides a map generation method. The method is applied to a terminal device. The method includes: sending a first request to a control device; receiving a control instruction in response to the first request, navigating to a first obstacle and a next navigation point, and generating a map based on a navigation trajectory of the terminal device, where the first obstacle and the next navigation point are determined according to the method in the first aspect or any possible implementation of the first aspect; and sending the map to the control device.

A sixth aspect of embodiments of this application provides a map generation system. The system includes a control device and a terminal device. The terminal device is configured to provide a plurality of obstacles in a first range, where the first range is a scanning range of a sensor in the terminal device. The control device is configured to determine a first obstacle and a next navigation point, where the first obstacle and the next navigation point are determined according to the method in the first aspect or any possible implementation of the first aspect. The control device is further configured to control the terminal device to navigate to the first obstacle and the next navigation point, and control the terminal device to generate a map based on a navigation trajectory of the terminal device.

A seventh aspect of embodiments of this application provides a computer-readable medium that stores a computer program or instructions. When the computer program or the instructions are run on a computer, the computer is enabled to perform the method according to the first aspect or any possible implementation of the first aspect.

An eighth aspect of embodiments of this application provides a computer program product. When the computer program product is executed on a computer, the computer is enabled to perform the method according to the first aspect or any possible implementation of the first aspect.

It can be learned from the foregoing technical solutions that this application has the following advantages: The terminal device is controlled to navigate to the first obstacle in the scanning range of the sensor, the next navigation point is determined, and then the map is generated based on the navigation trajectory of the terminal device. The next navigation point may be an obstacle that is in the plurality of candidate obstacles and that is closest to the first obstacle, or the next navigation point may be an obstacle that is not selected in the plurality of obstacles and that the terminal device does not pass through. Then, the map is generated based on the navigation trajectory of the terminal device. That is, in a map generation process, the next navigation point is determined by using the candidate obstacles. The candidate obstacles may be updated in real time, to perform comprehensive exploration, so as to complete map building without a static map. In addition, determining the candidate obstacles by using two ranges corresponding to scanning can reduce subsequent repeated exploration for a scanned obstacle, thereby implementing efficient map building.

## BRIEF DESCRIPTION OF DRAWINGS

FIG. 1A is a diagram of a structure of a system architecture according to an embodiment of this application;
FIG. 1B is a diagram of a structure of another system architecture according to an embodiment of this application;
FIG. 2 is a schematic flowchart of a map generation method according to an embodiment of this application;
FIG. 3 is an example diagram of a first range, a plurality of obstacles, and a second range according to an embodiment of this application;
FIG. 4 is an example diagram of a first obstacle according to an embodiment of this application;
FIG. 5 is an example diagram of three angles in a triangle perimeter according to an embodiment of this application;
FIG. 6 is an example diagram of a first range before update and a first range after update according to an embodiment of this application;
FIG. 7 is a diagram of a structure of a terminal device according to an embodiment of this application;
FIG. 8 is a diagram of functions of modules in a terminal device according to an embodiment of this application;
FIG. 9 is another schematic flowchart of a map generation method according to an embodiment of this application;
FIG. 10 is a diagram of a structure of a map generation device according to an embodiment of this application; and
FIG. 11 is a diagram of another structure of a map generation device according to an embodiment of this application.

## DESCRIPTION OF EMBODIMENTS

This application provides a map generation method, to complete map building planning without a static map.
For ease of understanding, the following first describes related terms and concepts mainly used in embodiments of this application.

1. Neural network

The neural network may include a neuron, and the neuron may be an arithmetic unit that uses $X_S$, and an intercept b as an input. An output of the arithmetic unit may be:

$$h_{W,b}(x) = f\left(W^T x\right) = f\left(\sum_{s=1}^{n} W_s x_s + b\right).$$

s=1, 2, ..., or n, n is a natural number greater than 1, $W_S$ is a weight of $X_S$, and b is a bias of the neuron. f is an activation function (activation function) of the neuron, and is used to introduce a non-linear feature into the neural network to convert an input signal in the neuron into an output signal. The output signal of the activation function may be used as an input of a next convolutional layer. The activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

2. Neural state machine

The neural state machine is a finite state machine constructed by using a neural network, that is, a model that determines a specific state of a system.

A robot autonomous map building technology is a technology in which a robot efficiently explores a completely unknown new environment without manual intervention. Currently, a rapidly exploring random tree algorithm is an algorithm for autonomous map building according to a random optimization principle. First, a user needs to specify a boundary range. Then, the algorithm randomly samples a point, determines whether the point is an obstacle-free point, then finds a node closest to the point in a random tree, and generates a new point by extending a connection line between the two points with a specific step size, to form a new expansion of the random tree. The search tree is randomly expanded until a boundary point within a first range of a vehicle is reached. A shortest path between the vehicle and the boundary point is found in the search tree, and the vehicle is driven to move to the boundary point. Upon arrival at the boundary point, a new boundary point continues to be explored according to the same method until there is no explorable region within the boundary range.

However, in the foregoing autonomous map building method, map building planning needs to be completed based on a known static map, and an obstacle change in a planning process directly affects map building performance and even causes a risk.

To resolve the foregoing technical problem, embodiments of this application provide a map generation method. A terminal device is controlled to navigate to a first obstacle in a scanning range of a sensor, a next navigation point is determined, and then a map is generated based on a navigation trajectory of the terminal device. The next navigation point may be an obstacle that is in a plurality of candidate obstacles and that is closest to the first obstacle, or the next navigation point may be an obstacle that is not selected in a plurality of obstacles and that the terminal device does not pass through. Then, the map is generated based on the navigation trajectory of the terminal device. That is, in a map generation process, the next navigation point is determined by using the candidate obstacles. The candidate obstacles may be updated in real time, to perform comprehensive exploration, so as to complete map building without a static map. In addition, determining the candidate obstacles by using two ranges corresponding to scanning can reduce subsequent repeated exploration for a scanned obstacle, thereby implementing efficient map building.

The map generation method provided in embodiments of this application may be applied to a robot map building scenario in scenes such as a home, a hotel, a restaurant, a shopping mall, an airport, a hospital, a scenic spot, and a factory. It may be understood that the foregoing several scenarios are merely examples. In actual application, there may be another application scenario. This is not specifically limited herein.

Before the map generation method provided in embodiments of this application is described, several system architectures provided in embodiments of this application are first described.

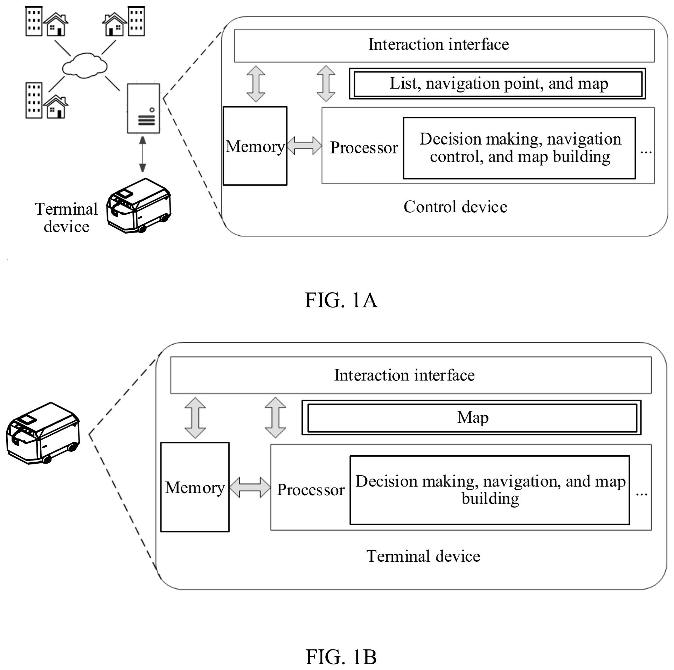

FIG. 1A is a diagram of a structure of a system architecture according to an embodiment of this application. The system architecture includes a terminal device and a control device. The terminal device is an initiator of the map generation method, and serves as an initiator of a map generation request. Generally, a user initiates a request by using the terminal device.

Optionally, the control device receives the map generation request from the terminal device through an interaction interface, and then performs processing such as decision making, navigation control, and map building by using a memory that stores data and a processor that generates a map. For example, the control device receives and analyzes a plurality of obstacles (obstacles in a scanning range of a sensor in the terminal device, which may also be referred to as obstacles in a first range) reported by the terminal device, to obtain a navigation point, and controls the terminal device to move to a next navigation point. The next navigation point is an obstacle whose distance from a first obstacle is the shortest or is less than or equal to a second preset threshold in a plurality of candidate obstacles, or the next navigation point is an obstacle that is not selected in the plurality of obstacles and that the terminal device does not pass through, and the candidate obstacles include an obstacle newly scanned by the terminal device in a process of navigation to the first obstacle and/or any obstacle other than the first obstacle in the plurality of obstacles.

Optionally, the control device receives a list determined by the terminal device in a process of movement to the navigation point. The list may include a list of scanned obstacles and a candidate list. The list of scanned obstacles includes an obstacle scanned in a second range in a process in which the terminal device moves to the first obstacle, and the second range is smaller than the first range. The candidate list includes an unexplored obstacle in the plurality of obstacles and a plurality of new obstacles, and the plurality of new obstacles include an obstacle scanned in the first range in the process in which the terminal device navigates to the first obstacle. Then, the control device determines a latest navigation point based on the list, and controls the terminal device to move. The control device may further generate a map based on each navigation point of the terminal device. In addition, the terminal device may generate a map based on each navigation point, and report the map to the control device.

Further, the control device may further update a scanning range of the terminal device based on the list, to reduce energy consumption of the terminal device.

In FIG. 1A, the control device and/or the terminal device may perform the map generation method in embodiments of this application.

FIG. 1B is a diagram of another structure of a system architecture according to an embodiment of this application. In FIG. 1B, a terminal device has capabilities such as navigation, decision making, and map building, and hardware of the terminal device may directly perform processing. A specific process is similar to that in FIG. 1A. For details, refer to the foregoing descriptions. Details are not described herein again.

For example, the terminal device first determines a plurality of obstacles by using a sensor, then analyzes the plurality of obstacles to obtain a next navigation point, and moves to the next navigation point. The terminal device determines a list in a process of movement to the next navigation point. Then, the terminal device determines a latest navigation point based on the list and moves. The terminal device may generate a map based on each navigation point.

In FIG. 1B, the terminal device may perform the map generation method in embodiments of this application.

The terminal device in embodiments of this application may be a mobile robot, an uncrewed aerial vehicle, an autonomous driving vehicle, or the like, or may be a cloud device (or referred to as a control device) that controls movement of a mobile robot. If the terminal device is a mobile robot, the mobile robot may be a robot that can move and execute a specific task in an indoor environment (for example, scenes such as a home, a hospital, and an airport and environments such as a shopping center and a factory workshop) or an outdoor environment (for example, a factory and a park). Specifically, the mobile robot may include a robot vacuum cleaner, a transfer robot, a guiding robot, or the like. The following uses only an example in which the terminal device is a mobile robot for description.

The control device in embodiments of this application may be a device or a server that has a data processing function, for example, a cloud server, a network server, an application server, and a management server. The memory in the control device may be a general term, and includes a local storage and a database storing historical data. The database may be in the control device, or may be in another network server. The control device may control movement of the terminal device to implement a map generation process in embodiments of this application.

The following describes the map generation method provided in embodiments of this application in detail with reference to the accompanying drawings.

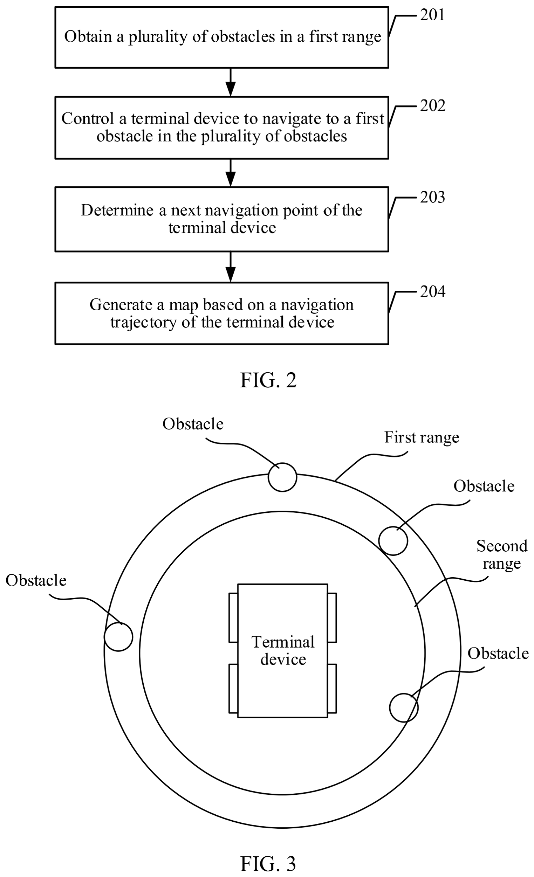

Refer to FIG. 2, which shows an embodiment of a map generation method provided in an embodiment of this application. The method may be performed by a map generation device, or may be performed by a component (for example, a processor, a chip, or a chip system) of the map generation device. The map generation device may be a control device (for example, as shown in FIG. 1A), or may be a terminal device (for example, as shown in FIG. 1B). Certainly, the method may be alternatively performed by a system including a control device and a terminal device (for example, as shown in FIG. 1A). The method includes step 201 to step 204.

Step 201: Obtain a plurality of obstacles in a first range.

The map generation device first obtains the plurality of obstacles in the first range, where the first range is a scanning range (for example, a radar scanning range) of a sensor in a terminal device.

In a possible implementation, the map generation device is the control device in the foregoing system architecture. A manner in which the control device obtains the plurality of obstacles may be a manner of receiving the plurality of obstacles sent by the terminal device.

In another possible implementation, the map generation device is the terminal device in the foregoing system architecture. The terminal device determines the plurality of obstacles in the first range by using the sensor of the terminal device.

It may be understood that the first range may be expressed in a manner such as a radius or coordinates. The plurality of obstacles may be represented in a form of map coordinates, an array, or the like. This is not specifically limited herein.

In addition, a quantity of the plurality of obstacles may be two or more. This is not specifically limited herein.

Optionally, when the map generation device is the terminal device (for example, a vehicle), the vehicle includes a sensor system, and the sensor system may include several sensors that sense location information of the vehicle. For example, the sensor system may include a positioning system (the positioning system may be a global positioning system GPS, a BeiDou system, or another positioning system), an inertial measurement unit (inertial measurement unit, IMU), a radar, a laser rangefinder, and a camera.

The positioning system may be configured to estimate a geographical location of the vehicle, for example, longitude and latitude information of the location of the vehicle. The IMU is configured to sense location and orientation changes of the vehicle based on inertial acceleration. In an embodiment, the IMU may be a combination of an accelerometer and a gyroscope. The radar may sense an object in a surrounding environment of the vehicle by using a radio signal, and may be specifically represented as a millimeter-wave radar or a lidar. In some embodiments, in addition to sensing the object, the radar can be further configured to sense a rate and/or an advancing direction of the object. The laser rangefinder may sense, by using a laser, an object in an environment in which the vehicle is located. In some embodiments, the laser rangefinder may include one or more laser sources, a laser scanner, one or more detectors, and another system component. The camera may be configured to capture a plurality of images of the surrounding environment of the vehicle. The camera may be a static camera or a video camera.

For example, the first range and the plurality of obstacles may be shown in FIG. 3. It may be understood that a quantity 4 of the plurality of obstacles in FIG. 3 is merely as an example.

Step 202: Control the terminal device to navigate to a first obstacle in the plurality of obstacles.

After obtaining the plurality of obstacles, the map generation device may control the terminal device to navigate to the first obstacle in the plurality of obstacles. The first obstacle is an obstacle that is closest to the terminal device or whose distance from the terminal device is less than or equal to a first preset threshold in the plurality of obstacles. The first preset threshold may be set according to an actual requirement. This is not specifically limited herein.

In a possible implementation, the map generation device is the control device in the foregoing system architecture. After obtaining the plurality of obstacles, the control device determines the first obstacle, and sends a control instruction to the terminal device, where the control instruction is used by the terminal device to navigate to the first obstacle.

In another possible implementation, the map generation device is the terminal device in the foregoing system architecture. After obtaining the plurality of obstacles, the terminal device may first determine the first obstacle in the plurality of obstacles, and navigate to the first obstacle.

In this embodiment of this application, the first obstacle may be an obstacle randomly selected from the plurality of obstacles, or an obstacle closest to the terminal device in the plurality of obstacles may be the first obstacle, or when there are a plurality of obstacles whose distances from the terminal device are less than or equal to the first preset threshold, the first obstacle may be determined randomly or based on a current moving direction of the terminal device. A manner of determining the first obstacle is not limited in this embodiment of this application.

Optionally, a distance between the first obstacle and the terminal device may be equal to the first preset threshold, and the first preset threshold is a distance between the terminal device and the closest obstacle in the plurality of obstacles. Alternatively, it is understood that the obstacle closest to the terminal device in the plurality of obstacles is determined as the first obstacle.

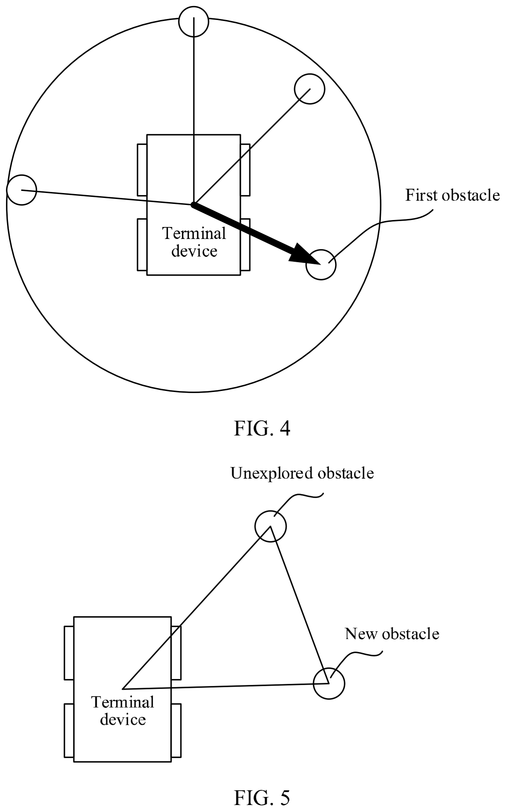

For example, the first obstacle is the obstacle closest to the terminal device, and the first obstacle is shown in FIG. 4. It can be learned that the distance between the first obstacle and the terminal device is less than a distance between another obstacle and the terminal device.

Step 203: Determine a next navigation point of the terminal device.

After controlling the terminal device to navigate to the first obstacle, the map generation device determines the next navigation point of the terminal device. The next navigation point is an obstacle whose distance from the first obstacle is the shortest or is less than or equal to a second preset threshold in a plurality of candidate obstacles, or the next navigation point is an obstacle that is not selected in the plurality of obstacles and that the terminal device does not pass through, and the candidate obstacles include an obstacle newly scanned by the terminal device in a process of navigation to the first obstacle and/or any obstacle other than the first obstacle in the plurality of obstacles.

"The terminal device passes through", "the terminal device navigates through", or "the terminal device passes by" corresponds to a second range, "the terminal device scans" corresponds to the first range, and the second range is smaller than the first range (which may also be understood as that a radius of the second range is less than a radius of the first range).

For example, a relationship between the first range and the second range may be shown in FIG. 3.

Optionally, to include fewer points in scanned obstacles, the second range may be a minimum circumscribed circle of the terminal device. Certainly, to improve map building efficiency, the second range may be larger than the minimum circumscribed circle of the terminal device and smaller than the first range, so that more points can be included in the scanned obstacles.

Optionally, the terminal device includes a first navigation mode and a second navigation mode, and the first navigation mode and the second navigation mode are used to determine the next navigation point of the terminal device.

Further, that the map generation device determines the next navigation point may specifically include: The map generation device first determines a navigation mode of the terminal device, and determines different next navigation points based on different navigation modes.

For example, that the map generation device determines the navigation mode of the terminal device based on the scanned obstacle and the candidate obstacles may be specifically: inputting the scanned obstacle and the candidate obstacles into a trained neural network to obtain a result, where the first result includes the first navigation mode or the second navigation mode. The trained neural network is obtained through training based on a preset navigation path. The trained neural network may also be understood as a classifier of a binary classification task. A label value is determined by using the preset navigation path, and then a difference between the label value and the result output by the neural network is reduced to train the neural network.

The scanned obstacle includes an obstacle scanned in the second range in a process in which the terminal device moves to the first obstacle. The scanned obstacle includes the first obstacle, and the second range is smaller than the first range. The candidate obstacles include an unexplored obstacle in the plurality of obstacles and an obstacle scanned in the first range in the process in which the terminal device moves to the first obstacle.

In a possible implementation, the map generation device is the control device in the foregoing system architecture. The control device controls the terminal device to navigate to the first obstacle, and controls the terminal device to collect and report the scanned obstacle and the candidate obstacle in a process of navigation to the first obstacle. The control device determines the next navigation point based on the scanned obstacle and the candidate obstacle.

In another possible implementation, the map generation device is the terminal device in the foregoing system architecture. The terminal device collects the scanned obstacle and the candidate obstacle in a process of navigation to the first obstacle, and determines the next navigation point based on the scanned obstacle and the candidate obstacle.

In a possible implementation, it is determined, based on the first navigation mode, that the next navigation point is the obstacle whose distance from the first obstacle is the shortest or is less than or equal to the second preset threshold in the plurality of candidate obstacles. Specifically, when the navigation mode is the first mode, the map generation device determines that the next navigation point is the obstacle whose distance from the first obstacle is the shortest or is less than or equal to the second preset threshold in the plurality of candidate obstacles.

In another possible implementation, it is determined, based on the second navigation mode, that the next navigation point is the obstacle that is not selected in the plurality of obstacles and that the terminal device does not pass through. Specifically, when the navigation mode is the second mode, the map generation device determines that the next navigation point is the obstacle that is not selected in the plurality of obstacles and that the terminal device does not pass through.

Optionally, when the navigation mode is the second navigation mode, a plurality of first distances may be first determined, and then an unexplored obstacle in the plurality of obstacles and/or a new obstacle (that is, a newly scanned obstacle) corresponding to a distance less than or equal to a third preset threshold in the first distances are/is determined as the next navigation point. Each of the plurality of first distances indicates a sum of distances between each unexplored obstacle in the plurality of obstacles and both the terminal device and each of a plurality of new obstacles. This process may also be understood as planning the next navigation point by using a smallest triangle perimeter. Three angles respectively correspond to an unexplored obstacle in the candidate obstacles (for example, an unexplored obstacle in the plurality of obstacles), a new obstacle, and the terminal device (for example, a geometric center point or a side center point of the terminal device). It may be understood that the next navigation point includes a candidate obstacle corresponding to the smallest triangle perimeter. When the next navigation point includes the unexplored obstacle in the plurality of obstacles and the new obstacle, the terminal device may first navigate to the new obstacle, and then navigate to the unexplored obstacle in the plurality of obstacles. Certainly, the terminal device may alternatively first navigate to the unexplored obstacle in the plurality of obstacles, and then navigate to the new obstacle.

In addition, in the second navigation mode, a point that is in the plurality of candidate obstacles and that is closest to the first obstacle may be directly determined as the next navigation point. Alternatively, a point that is in the plurality of new obstacles and that is closest to the first obstacle may be directly determined as the next navigation point. In addition, the next navigation point may be alternatively determined in a manner such as a smallest triangle area. This is not specifically limited herein. The smallest triangle perimeter means: A distance between the unexplored obstacle in the candidate obstacles and the new obstacle + a distance between the new obstacle and the terminal device + a distance between the terminal device and the unexplored obstacle in the candidate obstacles = a distance sum, and an unexplored obstacle and/or a new obstacle corresponding to the smallest triangle perimeter are/is found from a plurality of unexplored obstacles and the plurality of new obstacles as the next navigation point. The smallest triangle area means: In a plurality of triangles formed by unexplored obstacles in the candidate obstacles, new obstacles, and the terminal device, an unexplored obstacle and/or a new obstacle corresponding to the smallest triangle area are/is the next navigation point. Generally, in a case that the distance between the unexplored obstacle in the candidate obstacles and the new obstacle = the distance between the new obstacle and the terminal device = the distance between the terminal device and the unexplored obstacle in the candidate obstacles, a formed triangle is an equilateral triangle, and an area in this case is the smallest.

For example, the foregoing triangle may be shown in FIG. 5.

Optionally, when a quantity of the plurality of candidate obstacles is less than or equal to a third preset threshold, the next navigation point is planned by using the smallest triangle perimeter in the second navigation mode. When a quantity of the plurality of candidate obstacles is greater than or equal to a fourth preset threshold, the next navigation point may be planned in a manner such as a neural network in the second navigation mode. An input of the neural network is the scanned obstacle and the candidate obstacles. An output is an obstacle (used as the next navigation point) in the candidate obstacles.

Step 204: Generate a map based on a navigation trajectory of the terminal device.

After determining the next navigation point, the map generation device generates the map based on the navigation trajectory of the terminal device, where the navigation trajectory includes the first obstacle and the next navigation point.

Optionally, the navigation trajectory further includes at least one of the following: a location of an obstacle scanned during movement of the terminal device, a distance between a plurality of obstacles scanned during movement of the terminal device, and the like.

A type or a representation form of the map in this embodiment of this application may be a raster map, a metric map, a topological map, a semantic map, or the like. This is not specifically limited herein.

In a possible implementation, the map generation device is the control device in the foregoing system architecture. When the control device controls the terminal device to navigate to the first obstacle and the next navigation point, the terminal device generates a map based on collected obstacle information. Alternatively, the terminal device reports the obstacle information, and then the control device generates a map based on the obstacle information reported by the terminal device.

In another possible implementation, the map generation device is the terminal device in the foregoing system architecture. After navigating to the first obstacle and the next navigation point, the terminal device may generate a map based on collected obstacle information, or report the obstacle information to the control device, so that the control device generates a map based on the obstacle information reported by the terminal device.

It may be understood that, after the terminal device navigates to the next navigation point, the scanned obstacles and the candidate obstacles may be updated. For example, the next navigation point and an obstacle in the second range in a process in which the terminal device navigates to the next navigation point are included as scanned obstacles, and an unexplored candidate obstacle in the first range in the process in which the terminal device navigates to the next navigation point is included as a candidate obstacle. Further, the one after next navigation point is determined based on an obstacle scanned in the first range in the process in which the terminal device navigates to the next navigation point, updated scanned obstacles, and updated candidate obstacles. A determining manner is similar to that of determining the next navigation point, and details are not described herein again.

In this embodiment of this application, the terminal device is controlled to navigate to the first obstacle in the scanning range of the sensor, the next navigation point is determined, and then the map is generated based on the navigation trajectory of the terminal device. The next navigation point may be an obstacle that is in the plurality of candidate obstacles and that is closest to the first obstacle, or the next navigation point may be an obstacle that is not selected in the plurality of obstacles and that the terminal device does not pass through. Then, the map is generated based on the navigation trajectory of the terminal device. That is, in a map generation process, the next navigation point is determined by using the candidate obstacles. The candidate obstacles may be updated in real time, to perform comprehensive exploration, so as to complete map building without a static map. In addition, determining the candidate obstacles by using two ranges corresponding to scanning can reduce subsequent repeated exploration for a scanned obstacle, thereby implementing efficient map building.

Optionally, after the terminal device navigates to the next navigation point, the scanned obstacles and the candidate obstacles may be updated.

In a possible implementation, the map generation device may determine a second obstacle based on updated scanned obstacles and updated candidate obstacles, and navigate to the second obstacle.

In this case, step 204 in the embodiment shown in FIG. 2 may specifically include: generating a map based on the first obstacle, the next navigation point, and the second obstacle. This may also be understood as that the map is updated based on the second obstacle after step 204.

In another possible implementation, the map generation device may update a third range based on updated scanned obstacles and updated candidate obstacles. In this way, energy consumption of the terminal device is reduced, and endurance is improved. The third range includes the first range and/or the second range.

Optionally, after the terminal device navigates to the next navigation point, the third range is updated based on a preset condition, and the terminal device is controlled, based on an updated third range, to navigate to the one after next navigation point (for example, the second obstacle). The preset condition is related to the updated scanned obstacles, or the preset condition is related to the first range and the updated candidate obstacles.

When the third range includes the first range, because a scanned boundary point does not need to be scanned by the radar, a radar scanning section may be determined based on obstacle distribution of the scanned obstacles, or it is understood that the radar does not transmit a radar beam at a location of the scanned obstacle. This case may be understood as modifying a scanning angle of the radar.

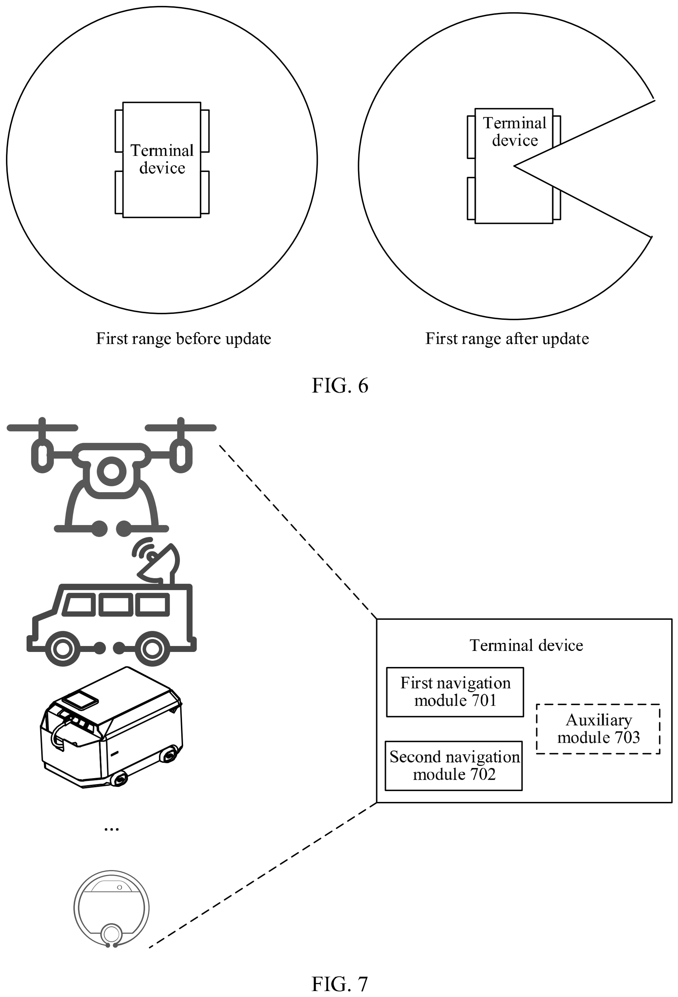

For example, FIG. 6 is a diagram of an example of a first range before update and a first range after update.

When the third range includes the second range, it may be understood that a radius of the second range is modified. The preset condition may include at least one of the following:

> 1. A radius of an updated second range is less than or equal to a distance between the terminal device and a closest obstacle in the candidate obstacles.
> 2. The radius of the updated second range is less than or equal to half of a radar scanning radius of the terminal device.
> 3. The radius of the updated second range is greater than or equal to a distance between the terminal device and a closest obstacle in the scanned obstacles.

It may be understood that the foregoing several preset conditions are merely examples. In actual application, there may be another case. For example, the radius of the updated second range is less than or equal to one third of the radar scanning radius of the terminal device. This is not specifically limited herein.

The map generation method provided in embodiments of this application may be understood as a method for real-time map building planning by a robot with bionic behavior. For ease of understanding, the following describes the embodiment in FIG. 2 in another dimension from a perspective of the bionic behavior.

For ease of understanding, a structure of the terminal device is first described from a bionic perspective.

The structure of the terminal device is shown in FIG. 7. The terminal device includes a first navigation module 701 and a second navigation module 702.

The first navigation module 701 is configured to identify a plurality of obstacles in a scanning range (which may also be referred to as a first range, that is, a first range) of a sensor (for example, a radar), use an obstacle whose distance from the terminal device is less than or equal to a first preset threshold as a navigation point, and drive the terminal device to perform navigation by using a shortest path planning algorithm. An obstacle in an area scanned in a second range in a navigation process is marked as a scanned obstacle, and a candidate obstacle (or understood as an obstacle that has not been scanned and is not a scanned obstacle) is recorded. After navigation is completed, the sensor continues to scan a plurality of new obstacles (that is, new obstacles scanned in the first range in a movement process). The scanned obstacle is not used for navigation again. The first navigation module 701 may repeat shortest path exploration, or is switched to the second navigation module 702. Alternatively, it is understood that whether the first navigation module 701 or the second navigation module 702 is used in a navigation mode of the terminal device is determined by using a neural state machine. An input of the neural state machine includes a current obstacle in the first range of the terminal device, an obstacle in scanned obstacles, and a candidate obstacle.

The second navigation module 702 is configured to determine a next navigation point through planning based on a smallest triangle perimeter by using the candidate obstacle obtained by the first navigation module 701. For example, a plurality of triangle perimeters are calculated, and a candidate obstacle corresponding to a triangle perimeter that meets a condition (for example, is less than a threshold or is the smallest) is selected as the next navigation point. The triangle perimeter is a perimeter of a triangle formed by the terminal device, an unexplored obstacle in the plurality of obstacles, and a new obstacle. Alternatively, the selected candidate obstacle may be changed into a first obstacle for cyclic exploration, or the candidate obstacle may not be converted into the first obstacle.

Optionally, to reduce energy consumption of the terminal device, the terminal device may further include an auxiliary module 703.

The auxiliary module 703 is configured to adaptively adjust the scanning range based on the scanned obstacles, and/or adaptively update a third range based on density of the candidate obstacles (for example, distribution and a quantity) and the first obstacle.

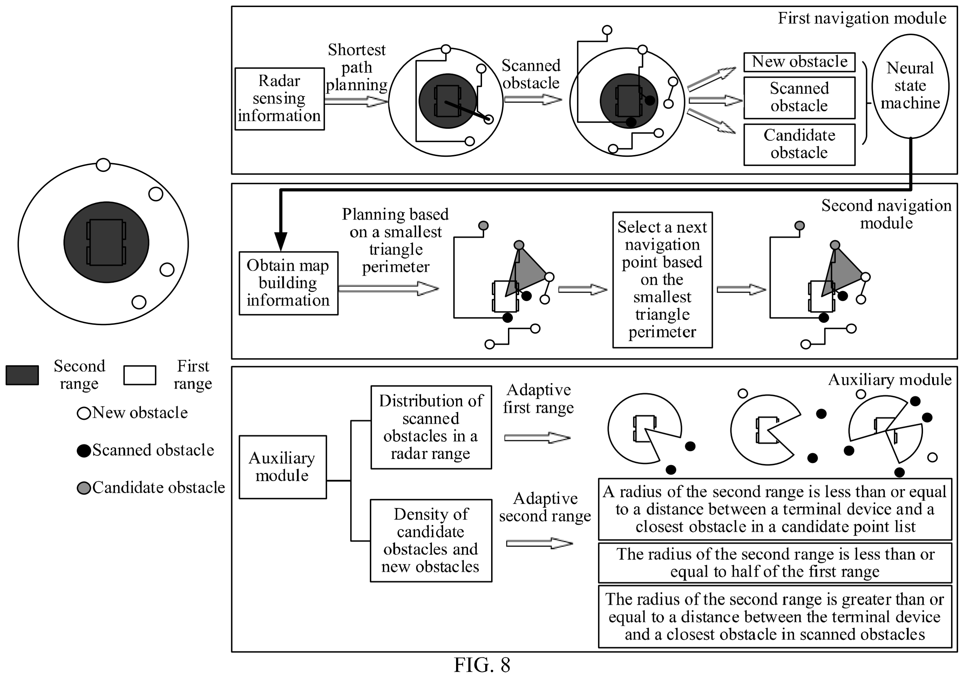

For example, functions of the modules in FIG. 7 may be shown in FIG. 8.

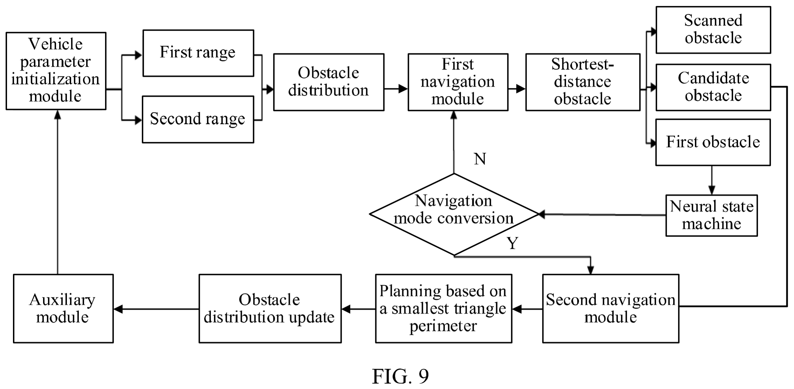

The following describes the embodiment in FIG. 2 in another dimension with reference to the modules in FIG. 7 and FIG. 8. Refer to FIG. 9, which shows another map generation method according to an embodiment of this application.

First, a first range and a second range of a terminal device are initialized, and information about an obstacle is obtained at a location of the terminal device based on a maximum radar scanning range. Then, the obstacle is tracked to obtain obstacle distribution. A first navigation module is enabled, an obstacle closest to the terminal device is considered as a next target point, and an unexplored point is stored as a candidate obstacle. In a process in which the terminal device moves a target, an obstacle covered by the second range is passed by the terminal device, and the passed obstacle is listed as a scanned obstacle, that is, is not used for navigation by the terminal device again. After the target is moved in a first navigation mode, a neural state machine is used to determine whether the navigation mode is switched, and if switching does not occur, the first navigation module is repeated. If the navigation mode is switched, a planning manner based on a smallest triangle perimeter is used to select a next navigation point based on a quantity of candidate obstacles and current obstacle distribution. After navigation and movement to a selected candidate obstacle, the navigation mode is switched. The first range and/or the second range are/is adaptively modified in real time based on the scanned obstacle, the candidate obstacle, and the obstacle distribution.

An adaptive radar scanning range means controlling a scanning section of a radar. Because a scanned boundary point does not need to be scanned by the radar, the radar scanning section may be determined based on distribution of scanned obstacles, and the radar does not transmit a radar beam at a location of the scanned obstacle. An adaptive second range means controlling the second range. If the second range is larger, more boundary points are listed as scanned obstacles, and model exploration space is reduced. Therefore, under a given constraint condition, a larger adaptive map building range is better. Examples of three constraint conditions are provided herein: 1. A radius of the second range is less than or equal to a distance between the terminal device and a closest obstacle in a candidate point list (that is, candidate obstacles). 2. The radius of the second range is less than or equal to a radius of the first range * 0.5. 3. The radius of the second range is greater than or equal to a distance between the terminal device and a closest obstacle in the scanned obstacles.

In the foregoing method, a map building method is explored by using a bionic boundary. A boundary point for capturing obstacle information by the radar is considered as prey. The first navigation mode leads a team to search for an obstacle with a shortest distance. An obstacle covered by the second range in a movement process becomes a scanned obstacle and is not explored. In the second navigation mode, an obstacle that is not used for navigation in the first navigation mode is stored. The first navigation mode and the second navigation mode are adaptively switched. This is determined by using a planning method based on a smallest triangle area or a neural state machine, so that a map building algorithm efficiently escapes from a local minimum value. In addition, adjustment on the adaptive radar scanning range and second range is fed back and optimized. To reduce energy consumption of an autonomous map building robot in a large scene, a scanning range of the radar is adaptively adjusted based on location distribution of obstacles that the terminal device has passed through, to avoid power consumption caused by full-range scanning of the radar. A larger second range indicates lower search and walking costs of the terminal device. A multi-constraint target function is set for the second range, and the second range is adaptively adjusted, thereby reducing map building costs of the terminal device.

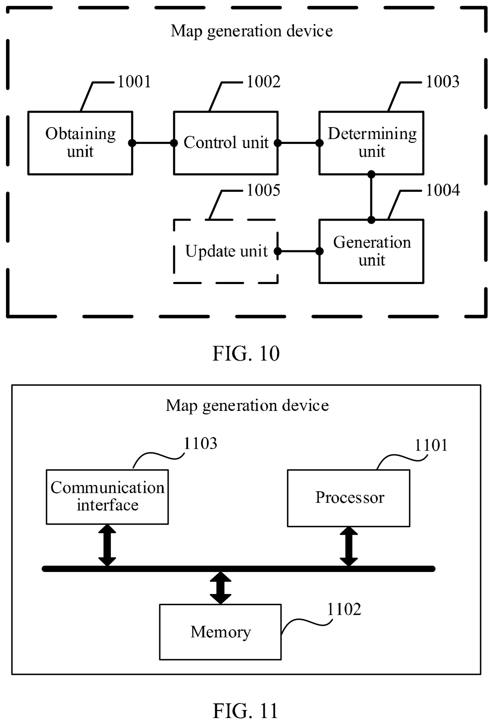

The foregoing describes the map generation method in embodiments of this application. The following describes a map generation device in embodiments of this application. The map generation device may be a terminal device or a control device. Refer to FIG. 10. An embodiment of the map generation device in embodiments of this application includes:

an obtaining unit 1001, configured to obtain a plurality of obstacles in a first range, where the first range is a scanning range of a sensor in a terminal device;
a control unit 1002, configured to control the terminal device to navigate to a first obstacle, where the first obstacle is an obstacle that is closest to the terminal device or whose distance from the terminal device is less than or equal to a first preset threshold in the plurality of obstacles;
a determining unit 1003, configured to determine a next navigation point of the terminal device, where the next navigation point is an obstacle whose distance from the first obstacle is the shortest or is less than or equal to a second preset threshold in a plurality of candidate obstacles, or the next navigation point is an obstacle that is not selected in the plurality of obstacles and that the terminal device does not pass through, and the candidate obstacles include an obstacle newly scanned by the terminal device in a process of navigation to the first obstacle and/or any obstacle other than the first obstacle in the plurality of obstacles; and
a generation unit 1004, configured to generate a map based on a navigation trajectory of the terminal device, where the navigation trajectory includes the first obstacle and the next navigation point.

Optionally, the terminal device includes a first navigation mode and a second navigation mode, and the first navigation mode and the second navigation mode are used by the determining unit 1003 to determine the next navigation point of the terminal device.

Optionally, the determining unit 1003 is specifically configured to determine, based on the first navigation mode, that the next navigation point is the obstacle whose distance from the first obstacle is the shortest or is less than or equal to the second preset threshold in the plurality of candidate obstacles.

Optionally, the determining unit 1003 is specifically configured to determine, based on the second navigation mode, that the next navigation point is the obstacle that is not selected in the plurality of obstacles and that the terminal device does not pass through.

Optionally, the navigation trajectory further includes at least one of the following: a location of an obstacle scanned during movement of the terminal device, and a distance between a plurality of obstacles scanned during movement of the terminal device.

Optionally, the next navigation point is determined in any one of the following manners: a smallest triangle perimeter, a smallest triangle area, and a shortest distance.

Optionally, the determining unit 1003 is further configured to determine a navigation mode of the terminal device based on a scanned obstacle and the candidate obstacles.

Optionally, the determining unit 1003 is specifically configured to input the scanned obstacle and the candidate obstacles into a trained neural network to obtain a result, where the result includes the first navigation mode or the second navigation mode, and the trained neural network is obtained through training based on a preset navigation path.

Optionally, the control unit 1002 is further configured to control the terminal device to navigate to the next navigation point; the map generation device further includes: an update unit 1005, configured to update the candidate obstacles; the update unit 1005 is further configured to update a third range based on a preset condition, where the third range includes the first range and/or a second range, the second range is smaller than the first range, and the preset condition is related to updated scanned obstacles, or the preset condition is related to the first range and updated candidate obstacles; and the control unit 1002 is further configured to control navigation of the terminal device based on an updated third range.

In this embodiment, operations performed by the units in the map generation device are similar to those described in the embodiments shown in FIG. 1A to FIG. 9. Details are not described herein.

In this embodiment, the control unit 1002 controls the terminal device to navigate to the first obstacle in the scanning range of the sensor, the determining unit 1003 determines the next navigation point, and then the generation unit 1004 generates the map based on the navigation trajectory of the terminal device. The next navigation point may be an obstacle that is in the plurality of candidate obstacles and that is closest to the first obstacle, or the next navigation point may be an obstacle that is not selected in the plurality of obstacles and that the terminal device does not pass through. Then, the map is generated based on the navigation trajectory of the terminal device. That is, in a map generation process, the next navigation point is determined by using the candidate obstacles. The candidate obstacles may be updated in real time, to perform comprehensive exploration, so as to complete map building without a static map. In addition, determining the candidate obstacles by using two ranges corresponding to scanning can reduce subsequent repeated exploration for a scanned obstacle, thereby implementing efficient map building.

FIG. 11 is a diagram of a structure of another map generation device according to an embodiment of this application. The map generation device may include a processor 1101, a memory 1102, and a communication port 1103. The processor 1101, the memory 1102, and the communication port 1103 are interconnected through a line. The memory 1102 stores program instructions and data.

The memory 1102 stores program instructions and data that correspond to steps performed by the map generation device in the corresponding implementations shown in FIG. 1A to FIG. 9.

The processor 1101 is configured to perform steps performed by the map generation device according to any one of the embodiments shown in FIG. 1A to FIG. 9.

The communication port 1103 may be configured to receive and send data, and is configured to perform steps related to obtaining, sending, and receiving in any one of the embodiments shown in FIG. 1A to FIG. 9.

In an implementation, the map generation device may include more or fewer components than those in FIG. 11. This is merely an example for description in this application, and is not limited.

An embodiment of this application further provides another map generation method. The method is applied to a control device. The method includes: receiving a first request; in response to the first request, controlling a terminal device to navigate to a first obstacle and a next navigation point, and generating a map based on a navigation trajectory of the terminal device, where the first obstacle and the next navigation point are determined according to the method in the embodiments shown in FIG. 1A to FIG. 9; receiving map building information from the terminal device; and generating a map based on the map building information.

An embodiment of this application further provides another map generation method. The method is applied to a terminal device. The method includes: sending a first request to a control device; receiving a control instruction in response to the first request, navigating to a first obstacle and a next navigation point, and generating a map based on a navigation trajectory of the terminal device, where the first obstacle and the next navigation point are determined according to the method in the embodiments shown in FIG. 1A to FIG. 9; and sending the map to the control device.

An embodiment of this application further provides a map generation system. The system includes a control device and a terminal device. The terminal device is configured to provide a plurality of obstacles in a first range, where the first range is a scanning range of a sensor in the terminal device. The control device is configured to determine a first obstacle and a next navigation point, where the first obstacle and the next navigation point are determined according to the method in the embodiments shown in FIG. 1A to FIG. 9. The control device is further configured to control the terminal device to navigate to the first obstacle and the next navigation point, and control the terminal device to generate a map based on a navigation trajectory of the terminal device.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A map generation method, wherein the method comprises:

    obtaining a plurality of obstacles in a first range, wherein the first range is a scanning range of a sensor in a terminal device;
controlling the terminal device to navigate to a first obstacle, wherein the first obstacle is an obstacle that is closest to the terminal device or whose distance from the terminal device is less than or equal to a first preset threshold in the plurality of obstacles;
determining a next navigation point of the terminal device, wherein the next navigation point is an obstacle whose distance from the first obstacle is the shortest or is less than or equal to a second preset threshold in the plurality of candidate obstacles, or the next navigation point is an obstacle that is not selected in the plurality of obstacles and that the terminal device does not pass through, and the candidate obstacles comprise an obstacle newly scanned by the terminal device in a process of navigation to the first obstacle and/or any obstacle other than the first obstacle in the plurality of obstacles; and
generating a map based on a navigation trajectory of the terminal device, wherein the navigation trajectory comprises the first obstacle and the next navigation point.

2. The method according to claim 1, wherein the terminal device comprises a first navigation mode and a second navigation mode, and the first navigation mode and the second navigation mode are used to determine the next navigation point of the terminal device.

3. The method according to claim 2, wherein determining the next navigation point of the terminal device comprises:
determining, based on the first navigation mode, that the next navigation point is the obstacle whose distance from the first obstacle is the shortest or is less than or equal to the second preset threshold in the plurality of candidate obstacles.

4. The method according to claim 2, wherein determining the next navigation point of the terminal device comprises:
determining, based on the second navigation mode, that the next navigation point is the obstacle that is not selected in the plurality of obstacles and that the terminal device does not pass through.

5. The method according to any one of claims 1 to 4, wherein the navigation trajectory further comprises at least one of the following: a location of an obstacle scanned during movement of the terminal device, and a distance between a plurality of obstacles scanned during movement of the terminal device.

6. The method according to any one of claims 1 to 5, wherein the next navigation point is determined in any one of the following manners:

> a smallest triangle perimeter;
> a smallest triangle area; and
> a shortest distance.

7. The method according to any one of claims 1 to 6, wherein before determining the next navigation point of the terminal device, the method further comprises: determining a navigation mode of the terminal device based on a scanned obstacle and the candidate obstacles.

8. The method according to claim 7, wherein determining the navigation mode of the terminal device based on the scanned obstacle and the candidate obstacles comprises: inputting the scanned obstacle and the candidate obstacles into a trained neural network to obtain a result, wherein the result comprises the first navigation mode or the second navigation mode, and the trained neural network is obtained through training based on a preset navigation path.

9. The method according to any one of claims 1 to 8, wherein before generating the map based on the navigation trajectory of the terminal device, the method further comprises:

> controlling the terminal device to navigate to the next navigation point;
> updating the candidate obstacles;
> updating a third range based on a preset condition, wherein the third range comprises the first range and/or a second range, the second range is smaller than the first range, and the preset condition is related to updated scanned obstacles, or the preset condition is related to the first range and updated candidate obstacles; and
> controlling navigation of the terminal device based on an updated third range.

10. A map generation device, wherein the map generation device comprises:

> an obtaining unit, configured to obtain a plurality of obstacles in a first range, wherein the first range is a scanning range of a sensor in a terminal device;
> a control unit, configured to control the terminal device to navigate to a first obstacle, wherein the first obstacle is an obstacle that is closest to the terminal device or whose distance from the terminal device is less than or equal to a first preset threshold in the plurality of obstacles;
> a determining unit, configured to determine a next navigation point of the terminal device, wherein the next navigation point is an obstacle whose distance from the first obstacle is the shortest or is less than or equal to a second preset threshold in the plurality of candidate obstacles, or the next navigation point is an obstacle that is not selected in the plurality of obstacles and that the terminal device does not pass through, and the candidate obstacles comprise an obstacle newly scanned by the terminal device in a process of navigation to the first obstacle and/or any obstacle other than the first obstacle in the plurality of obstacles; and a generation unit, configured to generate a map based on a navigation trajectory of the terminal device, wherein the navigation trajectory comprises the first obstacle and the next navigation point.

11. The map generation device according to claim 10, wherein the terminal device comprises a first navigation mode and a second navigation mode, and the first navigation mode and the second navigation mode are used by the determining unit to determine the next navigation point of the terminal device.

12. The map generation device according to claim 11, wherein the determining unit is specifically configured to determine, based on the first navigation mode, that the next navigation point is the obstacle whose distance from the first obstacle is the shortest or is less than or equal to the second preset threshold in the plurality of candidate obstacles.

13. The map generation device according to claim 11, wherein the determining unit is specifically configured to determine, based on the second navigation mode, that the next navigation point is the obstacle that is not selected in the plurality of obstacles and that the terminal device does not pass through.

14. The map generation device according to any one of claims 10 to 13, wherein the navigation trajectory further comprises at least one of the following: a location of an obstacle scanned during movement of the terminal device, and a distance between a plurality of obstacles scanned during movement of the terminal device.

15. The map generation device according to any one of claims 10 to 14, wherein the next navigation point is determined in any one of the following manners:

> a smallest triangle perimeter;
> a smallest triangle area; and
> a shortest distance.

16. The map generation device according to any one of claims 10 to 15, wherein the determining unit is further configured to determine a navigation mode of the terminal device based on a scanned obstacle and the candidate obstacles.

17. The map generation device according to claim 16, wherein the determining unit is specifically configured to input the scanned obstacle and the candidate obstacles into a trained neural network to obtain a result, wherein the result comprises the first navigation mode or the second navigation mode, and the trained neural network is obtained through training based on a preset navigation path.

18. The map generation device according to any one of claims 10 to 17, wherein the control unit is further configured to control the terminal device to navigate to the next navigation point;
the map generation device further comprises:

an update unit, configured to update the candidate obstacles;
the update unit is further configured to update a third range based on a preset condition, wherein the third range comprises the first range and/or a second range, the second range is smaller than the first range, and the preset condition is related to updated scanned obstacles, or the preset condition is related to the first range and updated candidate obstacles; and
the control unit is further configured to control navigation of the terminal device based on an updated third range.

19. A map generation device, comprising a processor, wherein the processor is coupled to a memory, the memory is configured to store a program or instructions, and when the program or the instructions are executed by the processor, the map generation device is enabled to perform the method according to any one of claims 1 to 9.

20. A map generation method, wherein the method is applied to a control device, and the method comprises:

receiving a first request;
in response to the first request, controlling a terminal device to navigate to a first obstacle and a next navigation point, and collecting map building information in a movement process, wherein the first obstacle and the next navigation point are determined by using the method according to any one of claims 1 to 9;
receiving the map building information from the terminal device; and
generating a map based on the map building information.

21. A map generation method, wherein the method is applied to a terminal device, and the method comprises:

sending a first request to a control device;
receiving a control instruction in response to the first request, navigating to a first obstacle and a next navigation point, and generating a map based on a navigation trajectory of the terminal device, wherein the first obstacle and the next navigation point are determined by using the method according to any one of claims 1 to 9; and
sending the map to the control device.

22. A map generation system, comprising a control device and a terminal device, wherein

the terminal device is configured to provide a plurality of obstacles in a first range, wherein the first range is a scanning range of a sensor in the terminal device;
the control device is configured to determine a first obstacle and a next navigation point, wherein the first obstacle and the next navigation point are determined by using the method according to any one of claims 1 to 9; and
the control device is further configured to control the terminal device to navigate to the first obstacle and the next navigation point, and control the terminal device to generate a map based on a navigation trajectory of the terminal device.

23. A computer storage medium, comprising computer instructions, wherein when the computer instructions are run on a terminal device, the terminal device is enabled to perform the method according to any one of claims 1 to 9.

24. A computer program product, wherein when the computer program product runs on a computer, the computer is enabled to perform the method according to any one of claims 1 to 9.

FIG. 1A

FIG. 1B

Obtain a plurality of obstacles in a first range — 201

Control a terminal device to navigate to a first obstacle in the plurality of obstacles — 202

Determine a next navigation point of the terminal device — 203

Generate a map based on a navigation trajectory of the terminal device — 204

FIG. 2

Obstacle

First range

Obstacle

Second range

Obstacle

Terminal device

Obstacle

FIG. 3

FIG. 4

FIG. 5

EP 4 722 649 A1

**First navigation module**

Radar sensing information → Shortest path planning → Scanned obstacle → New obstacle / Scanned obstacle / Candidate obstacle → Neural state machine

**Second navigation module**

Obtain map building information → Planning based on a smallest triangle perimeter → Select a next navigation point based on the smallest triangle perimeter →

**Auxiliary module**

Auxiliary module → Distribution of scanned obstacles in a radar range → Adaptive first range

Density of candidate obstacles and new obstacles → Adaptive second range

A radius of the second range is less than or equal to a distance between a terminal device and a closest obstacle in a candidate point list

The radius of the second range is less than or equal to half of the first range

The radius of the second range is greater than or equal to a distance between the terminal device and a closest obstacle in scanned obstacles

Second range / First range

○ New obstacle

● Scanned obstacle

◐ Candidate obstacle

FIG. 8

EP 4 722 649 A1

FIG. 9

Map generation device

1001
Obtaining unit

1002
Control unit

1003
Determining unit

1005
Update unit

1004
Generation unit

FIG. 10

Map generation device

1103
Communication interface

1101
Processor

1102
Memory

FIG. 11

## INTERNATIONAL SEARCH REPORT

| | International application No. |
|---|---|
| | **PCT/CN2024/096280** |

**A. CLASSIFICATION OF SUBJECT MATTER**

G01C21/00(2006.01)i

According to International Patent Classification (IPC) or to both national classification and IPC

**B. FIELDS SEARCHED**

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNTXT: WPABSC; CNKI; WPABS; ENTXT; ENTXTC; CJFD; VEN: 地图, 生成, 创建, 障碍物, 距离, 最近, 最小, 轨迹, 范围, 更新, 已扫, 候选, map, build, barrier, distance, least, track, update, candidate, range

**C. DOCUMENTS CONSIDERED TO BE RELEVANT**

| Category* | Citation of document, with indication, where appropriate, of the relevant passages | Relevant to claim No. |
|---|---|---|
| X | CN 109895100 A (DEEPBLUE TECHNOLOGY (SHANGHAI) CO., LTD.) 18 June 2019 (2019-06-18) <br> description, paragraphs [0044]-[0101], and figure 1 | 1-8, 10-17, 19-24 |
| A | CN 114777761 A (ANKER INNOVATIONS LTD.) 22 July 2022 (2022-07-22) <br> entire document | 1-24 |
| A | CN 113390427 A (UBTECH ROBOTICS CORP.) 14 September 2021 (2021-09-14) <br> entire document | 1-24 |
| A | CN 116182840 A (IFLYTEK CO., LTD.) 30 May 2023 (2023-05-30) <br> entire document | 1-24 |
| A | CN 114089775 A (HANGZHOU LANXIN TECHNOLOGY CO., LTD.) 25 February 2022 (2022-02-25) <br> entire document | 1-24 |
| A | WO 2018019144 A1 (AUTONAVI INFORMATION TECHNOLOGY CO., LTD.) 01 February 2018 (2018-02-01) <br> entire document | 1-24 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 August 2024** | **25 August 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/096280** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2019243370 A1 (BAIDU USA LLC) 08 August 2019 (2019-08-08)<br>entire document | 1-24 |

Form PCT/ISA/210 (second sheet) (July 2022)

EP 4 722 649 A1

**INTERNATIONAL SEARCH REPORT**
Information on patent family members

| International application No. |
| --- |
| **PCT/CN2024/096280** |

| Patent document cited in search report | | | Publication date (day/month/year) | Patent family member(s) | | | Publication date (day/month/year) |
| --- | --- | --- | --- | --- | --- | --- | --- |
| CN | 109895100 | A | 18 June 2019 | None | | | |
| CN | 114777761 | A | 22 July 2022 | None | | | |
| CN | 113390427 | A | 14 September 2021 | None | | | |
| CN | 116182840 | A | 30 May 2023 | None | | | |
| CN | 114089775 | A | 25 February 2022 | None | | | |
| WO | 2018019144 | A1 | 01 February 2018 | None | | | |
| US | 2019243370 | A1 | 08 August 2019 | US | 10754341 | B2 | 25 August 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310659014

- CN 202311055770